# EUROPEAN PATENT SPECIFICATION

(11) **EP 1 366 210 B1**
(45) Date of publication and mention of the grant of the patent: **13.10.2004**
(21) Application number: 02702980.0
(22) Date of filing: 21.02.2002
(51) Int. Cl.: C25B 1/00, C25C 3/06

(54) **PROCESS FOR PREPARING SILICON CARBIDE**
VERFAHREN ZUR HERSTELLUNG VON SILICIUMCARBID
METHODE DE PREPARATION DE CARBURE DE SILICIUM

(30) Priority: 26.02.2001 NO 20010961
(43) Date of publication of application: 03.12.2003
(73) Proprietor: Norwegian Silicon Refinery AS, 1525 Moss (NO)
(72) Inventor: STUBERGH, Jan, Reidar, N-1525 Moss (NO)
(74) Representative: Hucker, Charlotte Jane
(86) International application number: PCT/NO2002/000074
(87) International publication number: WO 2002/072920

(56) References cited:
- WO-A1-97/27143

## Description

The present invention relates to a process for preparing silicon carbide in a salt melt. Silica and silicate rocks and/or aluminum containing silicate rocks are used as raw material, with/without soda (Na₂CO₃) and/or limestone (CaCO₃) dissolved in fluorides, in particular cryolite.

The products prepared are of high purity.

WO 95/33870 (EP patent 763151), in the following designated as "WO 95", discloses a process for continuous preparation and batch preparation in one or more steps in one or more furnaces, of silicon (Si), optionally silumin (AlSi-alloys) and/or aluminum metal (Al) in a melting bath using feldspar or feldspar containing rocks dissolved in fluoride. In said process Si of high purity is prepared by electrolysis (step I) in a first furnace with a replaceable carbon anode arranged underneath the cathode, and a carbon cathode arranged at the top of the furnace. For the preparation of silumin the silicon-reduced residual electrolyte from step I is transferred to another furnace, and Al is added (step II). Then Al is prepared in a third furnace (step III) by electrolysis after Si has been removed in step I and possibly in step ll. It also describes combinations of furnaces with a partition wall in the preparation of the same substances. Further, process equipment for the procedure is described.

The present invention represents a further development and improvement of the above-mentioned process.

The most important further development is that SiC of high purity is prepared in molten Si, as explained below.

A great improvement is that it is possible to prepare pure Si (which is converted to SiC), pure low-iron low-alloyed Al-alloys (AlSi-alloys) and pure low-phosphorus high-alloyed Al-alloys (SiAl-alloys) in the same furnace (step I) by varying such parameters as the choice of raw material, current density (voltage) and time. The proportions of the Si and Al-products are adjusted by the choice of raw material and cathodic current density (voltage) in the electrolysis bath and mechanical manipulation of the cathodes. Further. the composition of the Al-(AlSi-alloy) as referred to herein, is an Al-alloy with an amount of Si which is lower than that of an eutectic mixture (12% Si, 88% Al). Correspondingly, a high-alloyed alloy (SiAl-alloy) as referred to herein is an alloy having a Si-content above that of an eutectic mixture.

According to the present invention there is provided a process for preparing silicon carbide according to the features of claim 1.

Soda may be added to the electrolysis bath so that said bath will be basic if quartz is used, in order to avoid loss of Si in the form of volatile SiF₄. With high concentrations of soda the melting point of the mixture is reduced, and the use of added fluorides goes down. Limestone is added if necessary to reduce the absorption of phosphorus in the Si deposited on the cathode.

In connection with the crystallization the fluorides should preferably be acidic.

A new feature according to the invention is that carbon which has either been taken from the cathode (e.g. as turnings) or from external sources, is mixed with silicon (in electrolyte). The carbon powder may then either be added to the molten bath and/or added to the solid frozen bath and/or the cathode deposit. If molten bath or frozen bath is used the cathode deposit must in advance be scraped into the bath. The carbon is mixed with the desired fractions and crushed to desired grain size. The obtained mixture consisting of Si, electrolyte and C is either melted directly or preferably subjected to acid treatment as described below. If acid treatment is employed, the melting of the acid-treated powder will correspond to step III. Carbon must in any case be added in stoichiometric excess to obtain a complete conversion to SiC in the Si melting process, steps II and III.

An advantageous feature is that concentrated H₂SO₄ is added to the untreated, pulverized cathode deposit (step II) containing 20% Si, and/or the pulverized bath (electrolyte) containing 20% Si after the cathode deposit has been scraped into the bath, and carbon. The powder fractions initially result in a concentration of Si to about 50% as the sulfuric acid has a good dissolving effect on cryolite. This mixture of 50% Si and other residual products, i.a. acidic sulfates, represents a sticky substance which must be treated further. By diluting the mixture with water and adding HCl in dilute amounts for some time a very good liberation of Si-grains floating to the surface is achieved. The HCl addition has the effect in addition to the refining of Si, that the powder mixture does not remain sticky. In this manner it is possible to obtain an increase in concentration of Si together with C in a Si/C/electrolyte grain mixture with a sand-water consistency. This sand-water consistency has the effect that the mixture is easy to filter and is washed with water and dried at room temperature. As a consequence of the increase of the concentration of Si and C in the powder mixture, the use of jig as a separator (WO 97) becomes superfluous. What happens is that the acidic mixture gradually reacts with the electrolyte and dissolves it. The Si-grains which are partly embedded in electrolyte, are gradually liberated and get in contact with the acid/water mixture. The acidic water attacks the contaminations in Si and C, which primarily consist of metals. Hydrogen gas is formed on the surface and in the pores of the Si- and C-grains, which results in an uplift even in very dilute acid. In addition to the fact that Si (d = 2,3 g/cm³) and C (d = 2,1 g/cm³) float up to the surface of the water, the Si- and C-grains will be hanging there until they are scraped away from the surface. The refining of the Si-grains has also been improved in addition to the concentration, since the acids over a longer time get in better contact with the liberated Si- and C-grains. (The Si- and C-grains are so pure that one gets below the detection limit for all the elements analyzed with microprobe equipment. This means that there is not any analysis method which can determine Si purer than about 99.99% as long it is impossible to concentrate Si to ∼100% from a Si/C/electrolyte grain mixture).

### Example 1 (from WO 95)

I. A feldspar of the type CaAl₂Si₂O₈ containing 50% SiO₂, 31% Al₂O₃ and 0,8% Fe₂O₃, was dissolved in cryolite and electrolyzed with a cathodic current density of 0,05 A/cm² (U = 2,5-3,0 V) for 18,5 hours. In the deposit around the cathode highly purified Si was formed separate from small FeSi-grains. In the electrolyte dissolved Al₂O₃ was formed. Al is not formed when the current density is so low.
   Since Al was not formed in the bath (Al³⁺-containing electrolyte) this was the reason why bath was drawn off from this furnace (step I) and to another furnace (step II) in which residues of Si and Si(lV) were removed by addition of Al before the electrolysis and the preparation of Al in a third furnace (step III). (See WO 95).
II. The cathode deposit which contained about 20% Si, was knocked off the cathode. In addition carbon (graphite, C) from the cathode followed. The obtained mixture of powder was acid washed as described above to obtain a mixture in which the concentration of Si and C had been increased.
III. The mixture from II together with residues of acid fluorides was melted above 1420°. The crystallized Si contained large areas with "highly purified" SiC as demonstrated by microprobe analysis. The purity in the sample was 99,997 % SiC in a matrix consisting of 99,997-99,99999 % Si.
**Conclusion:** The reason why not only SiC was obtained, was a stoichiometric deficit of carbon in the Si-melt, steps II-III. The reason why Si only and not Al was formed in step I in this case, was the low current density (voltage).

### Example 2 (Alternative process for step I with formation of Al)

A diorite (rock) containing feldspar and quartz, analyzed to contain 72% SiO₂, 16% Al₂O₃ and 1,4% Fe₂O₃, was dissolved in cryolite and electrolyzed at a cathodic current density of 0,5-1,6 A/cm² (U = 2,5-8,0 V) for 16.5 hours. In the deposit around the cathode highly purified Si and many small separate FeSi-grains were formed. Underneath the electrolyte Al (low-alloyed AlSi-alloy) was formed, and this had a low iron content.
**Conclusion:** The reason why both Si and Al were formed in step I was the high current density (voltage). The reason why the Al (AlSi-alloy) has a low iron content, was that the FeSi-grains remain in the deposit on the cathode.

Carbon was not added in the experiment. SiC could therefore not be formed.

It must be expected that if carbon is added to a steadily purer Si, the purity of the resulting SiC will also be increased.

### Example 3 (Alternative process for step I with formation of Al)

Quartz containing close to 99,9% SiO₂ was dissolved in cryolite (Na₃AlF₆), mixed with 5% soda (Na₂CO₃) and electrolyzed with a cathodic current density of 0.5 A/cm² (U = 6-7 V) for 44 hours. In the deposit around the cathode highly purified Si was formed. Most of (12 kg) of the cathode deposit was pushed into the bath (the electrolyte). The remaining cathode deposit (8 kg) was lifted out with the cathodes together with the residues of the anode. The cathode deposit was easily knocked off the cathodes and was mixed with the electrolyte in the bath. Both contained 20% Si. Small amounts of Al (low alloyed AlSi-alloy) were formed, which were low in iron and phosphorus. Iron and phosphorus poor AlSi-alloys are defined as < 130 ppm Fe and < 8 ppm P. The analysis of Al showed 8% Si and 110 ppm Fe and 0,08 ppm P. The crystallized silicon contained a total of 3 ppm contamination corresponding to 99,9997 % Si.
**Conclusion**: The reason why both Si and Al were formed in step I was the high current density (voltage). Al originates from electrolyzed cryolite. The reason why Al (the AlSi-alloy) was now high alloyed with Si, was that Si from the cathode deposit starts to dissolve in Al. The reason why the Al-alloy is iron and phosphorus poor was that the raw materials initially are low in iron and phosphorus.

The silicon together with residues of small grains of FeSi prepared by acid refining as described above without carbon addition, contains a total of 75 ppm Fe and about 15 ppm P. The concentrated Si powder mixture contained 80% Si or more than 80% Si. After crystallization of Si from the Si-melt, Si contained only 3,0 ppm contaminations. A mixing of slag with the acidic fluorides in Si will promote the formation of an even purer SiC. In a possible crystallization of SiC from a fluoride-refined Si-melt which also contains carbon, one must expect an even lower content of contaminations in SiC than demonstrated in example 1.

If it is desired to prepare Al together with Si, the cathodic current density should be relatively high, at least above 0,05 A/cm², preferably above 0,1, in particular above 0,2 A/cm². An upper limit is about 2, preferably about 1,6 A/cm². In addition to the formation of aluminum with a high current density, the electrolysis rate also increases with increasing cathodic current density.

With electrolysis it was found that the purity of Si was in the range 99,92 - 99,99%. Previously (W095), in order to concentrate Si further above 20% from the cathode deposit, the cathode deposit was crushed so that as much as possible of free and partly not free Si-grains would float up and could be taken up on the surface in a heavy liquid consisting of different C₂H₂Br₄/acetone mixtures with a density of up to 2,96 g/cm³. Si in solid form has a density of 2.3 g/cm³ and will float up, while solids of cryolite have a density of 3 g/cm³ and will remain at a bottom. After filtration and drying of the powder for removal of heavy liquid, the different concentration fractions were mixed with water/H₂SO₄/HCl for refining Si.

In WO 97/27143, in the following designated as "WO 97", water, HCl and H₂SO₄ in this order were added to crushed cathode deposit, containing 20% Si, to refine Si with a dilute NaOH which was formed by adding water. Then it was tried to concentrate the powder containing Si refined with HCl, with concentrated H₂SO₄.

Neither in WO 95 nor in WO 97 Si was concentrated more than to about 40%. The reason for this is that the fluorooxosilicate complexes in the cathode deposit were hydrolyzed in water and NaOH to form a difficultly soluble hydrated silica. As a consequence of this an addition of H₂SO₄ after the treatment with water did not accomplish the concentration effect which it has when added directly to untreated dry powder. Concentrated HCl does not have any essential concentrating effect as it contains much water in contrast to concentrated H₂SO₄. In WO 97 a jig was used to concentrate Si further. This resulted only in an insignificant concentration.

When it is primarily desired to prepare SiC, a quartz containing rock is suitably used as starting material. If Al is also of interest, a rock containing an Alrich feldspar, for instance anorthite (CaAl₂Si₂O₈) is suitably used.

Si may be melted together with Al prepared in the electrolysis (step I), to form Fe-poor, P-poor, low alloyed AlSi-alloys and/or high alloyed SiAl-alloys, which are desired alloys in many connections.

Both the high alloyed SiAl-alloys and the low-alloyed AlSi-alloys may be dissolved in HCl or H₂SO₄. Al goes into solution and "pure"-Si-powder (∼100% Si), free of electrolyte, is formed. From dissolved Al pure products of AlCl₃ and Al₂(SO₄)₃ are formed.

With respect to equipment it is suitable that the walls consisting of graphite in the electrolysis furnace advantageously can be replaced by SiC or silicon nitride-bound SiC.

The walls of the electrolysis furnace do not have to consist of Si (WO 95, figure 2 number 4). Further, Si does not have to cover the anode stem, since a current jump does not take place between the cathode and anode, even when they grow together.

## Claims

1. Process for preparing silicon carbide, wherein
I. silicate and/or quartz containing rocks are subjected to electrolysis in a salt melt consisting of a fluoride-containing electrolysis bath, whereby silicon is formed in the same bath and in a deposit on the cathode,
II. carbon powder from the cathode material and/or from external sources is added directly to the molten bath or frozen bath in addition to the cathode deposit, the frozen bath and the cathode deposit being crushed before or after the addition of carbon particles;
III. concentrated sulfuric acid and then hydrochloric acid and water are added to the product from step II,
IV. the obtained mixture of liberated Si-grains and carbon particles floating to the surface together with some slag, is melted at a temperature above 1420°C, and SiC is crystallized by cooling.

2. Process according to claim 1, wherein both the anode and the cathode are prepared from graphite, and the anode is placed under the cathode.

3. Process according to claim 2, wherein an amount of graphite is removed from the cathode and/or is added externally so that the amount of carbon is greater than the stoichiometric amount of carbon in SiC.

4. Process according to any of claims 1-3, wherein the fluoride-containing electrolysis bath comprises cryolite.

5. Process according to any of claims 1-4, wherein soda (Na₂CO₃) and limestone (CaCO₃) are used in the electrolysis bath.

6. Process according to any of claims 1-5 wherein quartz-containing rocks are used as a starting material.

7. Process according to any of claims 1-6, wherein a basic, neutral or preferably acidic fluoride-containing electrolyte in step IV is stirred Into the mixture of molten silicon and carbon powder, which gradually crystallizes to SiC.

## Revendications

1. Procédé de préparation de carbure de silicium, dans lequel
I.des roches contenant du silicate et/ou du quartz sont soumises à une électrolyse dans une masse fondue de sel constituée par un bain d'électrolyse contenant du fluorure, du silicium étant formé dans le même bain et sous la forme d'un dépôt sur la cathode,
II. de la poudre de carbone provenant du matériau de la cathode et/ou de sources extérieures est directement ajoutée au bain fondu ou au bain figé en supplément du dépôt de la cathode, le bain figé et le dépôt de la cathode étant concassés avant ou après l'addition des particules de carbone ;
III. de l'acide sulfurique concentré puis de l'acide chlorhydrique et de l'eau sont ajoutés au produit de l'étape II,
IV. le mélange obtenu, constitué de grains libérés de Si et de particules de carbone flottant vers la surface en même temps que quelques scories, est fondu à une température supérieure à 1420 °C, et du SiC est cristallisé par refroidissement.

2. Procédé selon la revendication 1, dans lequel l'anode et la cathode sont l'une et l'autre préparées à partir de graphite, et l'anode est placée sous la cathode.

3. Procédé selon la revendication 2, dans lequel une certaine quantité de graphite est prélevée sur la cathode et/ou est ajoutée depuis l'extérieur de manière à ce que la quantité de carbone soit supérieure à la quantité stoechiométrique de carbone dans SiC.

4. Procédé selon l'une quelconque des revendications 1 à 3, dans lequel le bain d'électrolyse contenant du fluorure comprend de la cryolite.

5. Procédé selon l'une quelconque des revendications 1 à 4, dans lequel du carbonate de sodium (Na₂CO₃) et du calcaire (CaCO₃) sont utilisés dans le bain d'électrolyse.

6. Procédé selon l'une quelconque des revendications 1 à 5, dans lequel des roches contenant du quartz sont utilisées comme matière de départ.

7. Procédé selon l'une quelconque des revendications 1 à 6, dans lequel, dans l'étape IV, un électrolyte contenant un fluorure basique, neutre ou de préférence acide est ajouté et mélangé au mélange de silicium fondu et de poudre de carbone, qui cristallise progressivement en SiC.

## Patentansprüche

1. Verfahren zur Herstellung von Siliciumcarbid, wobei
1. Silicat und/oder Quarz enthaltendes Gestein einer Elektrolyse in einer Salzschmelze bestehend aus einem Fluorid enthaltenden Elektrolysebad unterzogen wird, wodurch Silicium in dem Bad und als Abscheidung auf der Kathode gebildet wird,
11. Kohlepulver von dem Kathodenmaterial und/oder von externen Quellen direkt dem geschmolzenen Bad oder gefrorenen Bad zugegeben wird zusätzlich zu der Kathodenabscheidung, wobei das gefrorene Bad und die Kathodenabscheidung vor oder nach dem Zugeben der Kohleteilchen zerkleinert wird;
III. konzentrierte Schwefelsäure und anschließend Salzsäure und Wasser zu dem Produkt von Schritt II gegeben werden,
IV. die erhaltene Mischung von freigesetzten Si-Körnchen und Kohlepartikeln, die zusammen mit etwas Schlacke zur Oberfläche schweben, bei einer Temperatur über 1420°C geschmolzen wird und SiC durch Abkühlen kristallisiert wird.

2. Verfahren nach Anspruch 1, worin sowohl die Anode als auch die Kathode herstellt werden aus Graphit, und die Anode unter der Kathode angeordnet wird.

3. Verfahren nach Anspruch 2, worin eine Menge an Graphit von der Kathode entfernt und/oder extern zugefügt wird, dass die Menge an Kohlenstoff größer ist als die stöchiometrische Menge an Kohlenstoff in SiC.

4. Verfahren nach irgendeinem der Ansprüche 1 bis 3, worin das Fluorid enthaltende Elektrolysebad Kryolith enthält.

5. Verfahren nach irgendeinem der Ansprüche 1 bis 4, worin Soda (Na₂CO₃) und Kalkstein (CaCO₃) in dem Elektrolysebad verwendet werden.

6. Verfahren nach irgendeinem der Ansprüche 1 bis 5, worin Quarz enthaltendes Gestein als Ausgangsmaterial verwendet wird.

7. Verfahren nach irgendeinem der Ansprüche 1 bis 6, worin ein basischer, neutraler oder vorzugsweise saurer, Fluorid enthaltender Elektrolyt in Schritt IV in die Mischung aus geschmolzenen Silicium und Kohlepulver gerührt wird, welche allmählich zu SiC kristallisiert.
